# EUROPÄISCHE PATENTSCHRIFT

(11) **EP 3 441 237 B1**
(45) Veröffentlichungstag und Bekanntmachung des Hinweises auf die Patenterteilung: **31.03.2021**
(21) Anmeldenummer: 18172272.9
(22) Anmeldetag: 15.05.2018
(51) Int. Cl.: B60C 9/00, D02G 3/48, B60C 9/22, B60C 9/04

(54) **HYBRIDKORD ZUR VERWENDUNG ALS FESTIGKEITSTRÄGER IN EINER GÜRTELBANDAGE EINES FAHRZEUGLUFTREIFENS**
HYBRID CORD FOR USE AS A SUPPORT IN A BELT OF A PNEUMATIC VEHICLE TYRE
CORDE HYBRIDE EN TANT QUE SUPPORT DE FIXATION DANS UN BANDAGE D'UN PNEU DE VÉHICULE AUTOMOBILE

(30) Priorität: 11.08.2017 DE 102017214082
(43) Veröffentlichungstag der Anmeldung: 13.02.2019
(73) Patentinhaber: Continental Reifen Deutschland GmbH, 30165 Hannover (DE)
(72) Erfinder: Reese, Wolfgang, 31228 Peine (DE); Kramer, Thomas, 32049 Herford (DE)
(74) Vertreter: Continental Corporation

(56) Entgegenhaltungen:
- EP-A1- 3 006 228
- EP-A1- 3 031 623
- WO-A1-2014/053884
- WO-A1-2014/102719
- DE-A1-102009 003 359
- JP-A- 2009 091 713
- US-A1- 2014 150 948

## Beschreibung

Die Erfindung betrifft einen Hybridkord zur Verwendung als Festigkeitsträger in einer Festigkeitsträgerlage, insbesondere einer Gürtelbandage, eines Fahrzeugluftreifens aus zumindest einem hochmoduligen Garn und einem niedermoduligen Garn, welche miteinander endverdreht sind, wobei die kumulierte Feinheit aller hochmoduligen Garne größer als 2500 dtex ist, wobei der Hybridkord eine bezüglich ihrer Garnfeinheit asymmetrische Konstruktion aus genau zwei Garnen aufweist, wobei der Hybridkord genau ein hochmoduliges Garn und genau ein niedermoduliges Garn aufweist, wobei die Kraft, die jeweils auf ein Garn bei 1% Dehnung und bei 2% Dehnung aufgebracht werden muss, normiert auf die Garnfeinheit in tex und ermittelt nach ASTM D885, für ein niedermoduliges Garn bei 1% Dehnung weniger als 150 mN/tex und bei 2% Dehnung weniger als 200 mN/tex sowie für ein hochmoduliges Garn bei 1% Dehnung mehr als 300 mN/tex und bei 2% Dehnung mehr als 500 mN/tex beträgt und wobei das hochmodulige Garn eine Feinheit von größer als 2500 dtex aufweist. Die Erfindung betrifft ferner eine Festigkeitsträgerlage für elastomere Erzeugnisse aufweisend einen solchen Hybridkord sowie einen Fahrzeugluftreifen aufweisend eine solche Festigkeitsträgerlage.

Ein "Garn" ist im Rahmen der vorliegenden Erfindung in Anlehnung an die DIN 60900 ein linienförmiges Gebilde, das aus mehreren einzelnen Filamenten, d.h. Endlosfasern, besteht. Bevorzugt sind die Filamente des Garns miteinander verdreht. Im Rahmen der vorliegenden Erfindung stellen "Korde" linienförmige Gebilde dar, die aus zwei oder mehr miteinander endverdrehten Garnen bestehen.

Es sind unterschiedliche Hybridkorde für den Einsatz als Festigkeitsträger der Gürtelbandage bekannt. Ein "Hybridkord" stellt einen Kord dar, bei dem zwei oder mehr unterschiedliche Garne miteinander endverdreht sind. Bei einer solchen Hybridkonstruktion wird beispielsweise ein hochmoduliges Garn durch Vertwistung mit einem niedermoduligen Garn auf eine helikale Bahn gebracht. Hierdurch ist eine bestimmte konstruktive Dehnung des hochmoduligen Garns, welches rein vom Material her eine geringe Dehnfähigkeit aufweist, ermöglicht.

Das "niedermodulige Garn" und das "hochmodulige Garn" ist im Rahmen der Erfindung anhand der in der nachfolgenden Tabelle 1 beschriebenen Kraft-Dehnungseingenschaften definiert. Es ist dabei die Kraft bestimmt, die jeweils auf ein Garn bei 1% Dehnung und bei 2% Dehnung aufgebracht werden muss, normiert auf die Garnfeinheit in tex. Ermittelt wird nach ASTM D885.

**Tabelle 1**

| Garn \ Dehnung | 1% | 2% |
|---|---|---|
| Niedermodulig | < 150 mN/tex | < 200 mN/tex |
| Hochmodulig | > 300 mN/tex | > 500 mN/tex |

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Korden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling, wenn der Rohling auf einer flachen Trommel gewickelt wird.

Die Festigkeitsträger der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Für die Hochgeschwindigkeitstauglichkeit ist eine hohe Umfangssteifigkeit des Reifens erforderlich, um auch bei hohen Geschwindigkeiten eine hohe Kurvensteifigkeit sicherzustellen.

Als Festigkeitsträger für die Bandage sind bereits unterschiedlichste Korde vorgeschlagen worden. So ist beispielsweise aus der EP 3031623 A1 für die Festigkeitsträgerkorde in der Gürtelbandage ein Hybridkord offenbart, der aus einem erstverdrehten Garn aus Aramid einer Feinheit von 1680 dtex und einem erstverdrehten Garn aus Polyamid 6.6 einer Feinheit von 470 dtex, welche miteinander endverdreht sind, gebildet ist. Ein solcher Hybridkord weist ein spezielles Kraft-Dehnungs-Verhalten auf. Der Kord weist in einem Zugkraft-Dehnungs-Diagramm bei geringer Dehnung zunächst eine geringe Steigung der Kurve auf; bei höherer Dehnung steigt dann die Kurve überproportional stark an. In diesem letzten Bereich ist eine geringe weitere Dehnung mit hohem Kraftaufwand verbunden. Dieses Kraft-Dehnungs-Verhalten ermöglicht eine Erhebung bei der Bombage und der Vulkanisation. Es hat sich allerdings gezeigt, dass ein solch relativ dünner Hybridkord nicht ausreichend hohe Umfangskräfte aufbringt, um bei Hochgeschwindigkeit ausreichend gute Handling Eigenschaften zu gewährleisten.

Um eine für den Einsatz im Hochgeschwindigkeitsbereich vorteilhafte Umfangssteifigkeit zu erlangen ist es aus der WO 2016023656 A1 bekannt, einen Hybridkord der Konstruktion Aramid 1680 x 2 + Polyamid 6.6 700 x 1 als Festigkeitsträger der Gürtelbandage zu verwenden. Hierbei sind zwei Aramidgarne und ein Polyamidgarn zu einem Hybridkord endverdreht. Solche Korde werden üblicherweise in einem zweistufigen Twist-Prozess hergestellt. In einer ersten Stufe erfährt dabei jedes der Garne eine Erstverdrehung. In einer zweiten Stufe werden die einzelnen Garne zum Hybridkord miteinander endverdreht. Nachteilig an solchen Korden ist allerdings, dass Aramid ein sprödes Material ist, wodurch durch mechanische Belastung der Aramidfilamente bei der Herstellung des Kordes, insbesondere durch die zweimalige Verdrehung der Aramidfilamente, die Ermüdungsbeständigkeit und die Festigkeit des Kordes herabgesetzt wird.

Die WO 2014102719 A1 offenbart einen Hybridkord der Konstruktion 940 dtex Polyamid 6.6 + 3300 dtex Basalt sowie einen Hybridkord aufweisend ein hochmoduliges Basaltgarn mit einer Feinheit von 680 bis 6000 dtex sowie ein Polyamid 6.6 - Garn mit einer Feinheit von 940 bis 2800 dtex.

Der Erfindung liegt die Aufgabe zugrunde, mit einfachen Mitteln einen Hybridkord für die Gürtelbandage eines Fahrzeugluftreifens bereitzustellen, welcher bei gleichzeitig weiterhin guter Hochgeschwindigkeitstauglichkeit eine verbesserte Ermüdungsbeständigkeit und eine verbesserte Festigkeit aufweist und kostengünstiger herzustellen ist.

Gelöst wird die gestellte Aufgabe erfindungsgemäß dadurch, dass die Feinheit des hochmoduligen Garns mindestens um einen Faktor 6, besonders bevorzugt um einen Faktor 7, größer ist als die Feinheit des niedermoduligen Garns.

Überraschenderweise hat sich gezeigt, dass durch einen solchen Hybridkord aus genau zwei Garnen, die bezüglich ihrer Garnfeinheit stark asymmetrisch sind, ein Festigkeitsträger bereitgestellt ist, der sich noch besser als Festigkeitsträger für die Gürtelbandage eignet. Ein solcher Hybridkord aus nur zwei Garnen kann auf einfache Art und Weise mittels eines einstufigen Verfahrens hergestellt werden. Mehrfache mechanische Belastungen der Filamente des hochmoduligen Garnes in der Herstellung sind damit vermieden, wodurch der Hybridkord eine verbesserte Ermüdungsbeständigkeit und eine verbesserte Festigkeit aufweist. Weiterhin ist ein so hergestellter Hybridkord kostengünstiger in seiner Herstellung.

Weiter zeichnet sich der erfindungsgemäße Hybridkord durch eine starke Asymmetrie hinsichtlich der Garnfeinheiten des hochmoduligen Garnes zum niedermoduligen Garn aus, wobei das hochmodulige Garn eine Feinheit von mindestens 2500 dtex aufweist. Diese Kombination aus Asymmetrie hinsichtlich der Garnfeinheiten im Hybridkord und einer hohen Feinheit des einzigen hochmoduligen Garns hat sich überraschenderweise als sehr geeignet für den Einsatz in der Gürtelbandage erwiesen. Ein solcher Hybridkord ermöglicht eine hohe Umfangssteifigkeit und damit eine sehr gute Hochgeschwindigkeitstauglichkeit. Auch weitere positive Eigenschaften des Hybridkordes, wie ein angepasstes Dehnverhalten bei unterschiedlicher Dehnung ist weiterhin ermöglicht.

Die besonders vorteilhafte Kraft-Dehnungskurve ergibt sich dadurch, dass die Feinheit des hochmoduligen Garns mindestens um einen Faktor 6, besonders bevorzugt um einen Faktor 7, größer ist als die Feinheit des niedermoduligen Garns. Das niedermodulige Garn gewährleistet auch bei starker Asymmetrie der Feinheiten einen z.B. für den Reifenbau vorteilhaften flachen Anfangsbereich der Kraft-Dehnungskurve. Eine geringe Feinheit des niedermoduligen Garns ist kostengünstig in der Bereitstellung des Garns und ermöglicht über einen geringen Materialeinsatz eine Reduzierung des Rollwiderstandes. Weiterhin zeichnet sich ein geringer Anteil des niedermoduligen Garns durch Vorteile im Flatspot-Verhalten aus.

Hierdurch ist ein Hybridkord zur Verfügung gestellt, der bei gleichzeitig weiterhin guter Hochgeschwindigkeitstauglichkeit eine verbesserte Ermüdungsbeständigkeit und eine verbesserte Festigkeit aufweist und kostengünstiger herzustellen ist.

Bevorzugt weist das niedermodulige Garn eine Feinheit von mindestens 200 dtex, besonders bevorzugt von mindestens 350 dtex auf. Als besonders vorteilhaft hat es sich herausgestellt, wenn das hochmodulige Garn eine Feinheit von mindestens 3000 dtex, bevorzugt von mindestens 3300 dtex, aufweist. Ein solcher Hybridkord ermöglicht eine sehr steile Kraft-Dehnungskurve bei höherer Dehnung und kann eine besonders hohe Umfangssteifigkeit des Reifens erwirken. Vorteilhaft ist es, wenn der Anteil des hochmoduligen Garnes im Hybridkord 80 Gew.% (Gewichts-%) bis 90 Gew.%, bevorzugt 82 Gew.% bis 88 Gew% ist.

Ein Garn bestehend aus einem Material besteht ganz oder teilweise aus Filamenten aus diesem Material. Ein Filament aus einem Material besteht ganz oder teilweise aus diesem Material. Ein Aramidgarn oder ein Garn aus Aramid besteht ganz oder teilweise aus Filamenten aus Aramid. Bevorzugt bestehen alle Filamente eines Garns aus Filamenten desselben Materials.

Vorteilhafterweise besteht das hochmodulige Garn aus einem Material welches ausgewählt ist aus der Gruppe bestehend aus Carbonfasern, Glasfasern, Basalt, aromatischem Polyamid und aromatischem Polyethylenterephthalat. Bevorzugt handelt es sich bei dem Material um Aramid.

Vorteilhafterweise besteht das niedermodulige Garn aus einem Polyamid oder aus einem Polyester. Das Polyamid (PA) kann ausgewählt sein aus der Gruppe bestehend aus PA 4.6, PA 6, PA 6.6, PA 10.10, PA 11 und PA12. Bevorzugt handelt es sich um PA 4.6, PA 6.6 oder PA 6. Das Polyester kann ausgewählt sein aus der Gruppe bestehend aus Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN), Polyethylenterephthalat (PET). Es kann sich um ein thermoplastisches Polyester und/oder um ein vernetztes ungesättigtes Polyester handeln. Bevorzugt handelt es sich um PET.

Zweckmäßig ist es, wenn das hochmodulige Garn ein Aramidgarn und das niedermodulige Garn ein Garn aus PA, bevorzugt aus PA 4.6, PA6 oder PA 6.6, ist.
Zweckmäßig ist es auch, wenn das hochmodulige Garn ein Garn aus Carbonfasern und das niedermodulige Garn ein Garn aus PA, bevorzugt aus PA 4.6, PA 6 oder PA 6.6, ist.

In einer bevorzugten Ausführungsform beträgt der Twist-Faktor α der Endverdrehung 150 bis 250, bevorzugt 190 bis 210. Der Twist-Faktor α ist dabei definiert als α = Verdrehungszahl [T/m] · (Kordfeinheit [tex]/ 1000)^{1/2}. Die Verdrehungszahl ist in Umdrehungen pro Meter (Turns per meter) angegeben. Die Kordfeinheit bezeichnet hier die Summe der Garnfeinheiten des Hybridkordes. Ein Hybridfestigkeitsträger mit einem solchen Twist-Faktor zeichnet sich durch ein Kraft-Dehnungs-Verhalten aus, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit sowie eine gute Ermüdungsbeständigkeit verleiht.

Zweckmäßig ist es, wenn beide Garne die gleiche Twistrichtung aufweisen und wenn der Kord die dazu entgegengesetzte Twistrichtung aufweist. Entweder sind also beide Garne in S-Richtung vorverdreht und miteinander in Z-Richtung zum Kord endverdreht oder es sind beide Garne in Z-Richtung vorverdreht und miteinander in S-Richtung zum Kord endverdreht.

In einer vorteilhaften Ausführungsform weist der Hybridkord als hochmoduliges Garn ein Aramidgarn der Feinheit 3360 dtex auf. Ein Aramidgarn einer so hohen Feinheit gewährleistet ein für die Gürtelbandage vorteilhaftes Kraft-Dehnungsverhalten bei geringer Dehnung.

Zweckmäßig ist es, wenn das niedermodulige Garn ein Garn aus PA 6.6 der Feinheit 470 dtex ist. Besonders zweckmäßige Ausführungsformen des Hybridgarns weisen dabei die Konstruktion Aramid 3360 x 1 + PA6.6 470 x 1 auf.

Zweckmäßig ist es auch, wenn das niedermodulige Garn ein Garn aus PET der Feinheit 550 dtex ist. Besonders zweckmäßige Ausführungsformen des Hybridgarns weisen dabei die Konstruktion Aramid 3360 x 1 + PET 550 x 1 auf.

Ein bevorzugtes Ausführungsbeispiel ist ein Hybridkord aus einem Aramidgarn mit einer Garnfeinheit von 3360 dtex und aus einem PA 6.6-Garn mit einer Garnfeinheit von 470 dtex. Das Aramid-Garn weist eine Erstverdrehung mit einer Verdrehungszahl von 320 T/m, entweder in Z-Richtung oder in S-Richtung, auf. Das PA 6.6-Garn weist ebenfalls eine Erstverdrehung mit einer Verdrehungszahl von 320 T/m mit gleicher Verdrehungsrichtung auf.

Das Aramid-Garn und das PA 6.6-Garn werden zu einem Hybridkord endverdreht, dessen Verdrehungsrichtung die entgegengesetzte Verdrehungsrichtung der einzelnen Garne ist. So wird beispielsweise bei einer Verdrehungsrichtung Z der Garne der Kord in S-Richtung gedreht. Die Verdrehungszahl des Kordes beträgt 320 T/m, was bei einer Kord-Feinheit von 3830 dtex einem Twist-Faktor von α = 198 entspricht.

Die Erfindung betrifft ebenfalls eine Festigkeitsträgerlage für elastomere Erzeugnisse, insbesondere für Fahrzeugluftreifen, aufweisend einen solchen Hybridkord als Festigkeitsträger. Die Festigkeitsträger sind üblicherweise in einer solchen Festigkeitsträgerlage parallel zueinander angeordnet und in elastomeres Material eingebettet.

Die Erfindung betrifft ebenfalls einen Fahrzeugluftreifen mit einer ein- oder mehrlagigen Karkasse, mit einem radial außerhalb der Karkasse angeordneten mehrlagigen Gürtel und mit einer den Gürtel radial außen abdeckenden ein- oder mehrlagigen Gürtelbandage, wobei zumindest eine Festigkeitsträgerlage der Karkasse, des Gürtels, der Wulstverstärkung und/oder der Gürtelbandage, bevorzugt der Gürtelbandage, als Festigkeitsträger einen Hybridkord gemäß einer oder mehreren der vorgenannten Ausführungen aufweist.

Weiter betrifft die Erfindung ein Verfahren zur Herstellung eines solchen Hybridkordes. Dabei wird der hochmodulige Garn und der niedermodulige Garn mittels eines einstufigen Verfahrens miteinander verdreht. Dies kann mittels eines Direktkablierers erfolgen. Hierbei werden die beiden Garne in einem einzigen Arbeitsschritt verdreht. Mehrfache mechanische Belastungen der Filamente des hochmoduligen Garnes in der Herstellung sind damit vermieden, wodurch der Hybridkord eine verbesserte Ermüdungsbeständigkeit und eine verbesserte Festigkeit aufweist. Weiterhin ist ein solches Herstellungsverfahren kostengünstiger.

## Patentansprüche

1. Hybridkord zur Verwendung als Festigkeitsträger in einer Festigkeitsträgerlage, insbesondere einer Gürtelbandage, eines Fahrzeugluftreifens aus zumindest einem hochmoduligen Garn und einem niedermoduligen Garn, welche miteinander endverdreht sind, wobei die kumulierte Feinheit aller hochmoduligen Garne größer als 2500 dtex ist,
• wobei der Hybridkord eine bezüglich ihrer Garnfeinheit asymmetrische Konstruktion aus genau zwei Garnen aufweist,
• wobei der Hybridkord genau ein hochmoduliges Garn und genau ein niedermoduliges Garn aufweist,
• wobei die Kraft, die jeweils auf ein Garn bei 1% Dehnung und bei 2% Dehnung aufgebracht werden muss, normiert auf die Garnfeinheit in tex und ermittelt nach ASTM D885, für ein niedermoduliges Garn bei 1% Dehnung weniger als 150 mN/tex und bei 2% Dehnung weniger als 200 mN/tex sowie für ein hochmoduliges Garn bei 1% Dehnung mehr als 300 mN/tex und bei 2% Dehnung mehr als 500 mN/tex beträgt,
**dadurch gekennzeichnet, dass**
• das hochmodulige Garn eine Feinheit von größer als 2500 dtex und einen Höchstwert von 3360 dtex aufweist und die Feinheit des hochmoduligen Garns mindestens um einen Faktor 6, besonders bevorzugt um einen Faktor 7, größer ist als die Feinheit des niedermoduligen Garns.

2. Hybridkord nach einem der vorangehenden Ansprüche, **dadurch gekennzeichnet, dass** das niedermodulige Garn eine Feinheit von mindestens 200 dtex, bevorzugt von mindestens 350 dtex aufweist.

3. Hybridkord nach einem der vorangehenden Ansprüche, **dadurch gekennzeichnet, dass** das hochmodulige Garn eine Feinheit von mindestens 3000 dtex, bevorzugt von mindestens 3300 dtex, besonders bevorzugt von 3360 dtex, aufweist.

4. Hybridkord nach einem der vorangehenden Ansprüche, **dadurch gekennzeichnet, dass** der Anteil des hochmoduligen Garnes im Hybridkord 80 Gew.% (Gewichts-%) bis 90 Gew.%, bevorzugt 82 Gew.% bis 88 Gew%, ist.

5. Hybridkord nach einem oder mehreren der vorangehenden Ansprüche, **dadurch gekennzeichnet, dass** das hochmodulige Garn aus einem Material besteht, welches ausgewählt ist aus der Gruppe bestehend aus Carbonfasern, Glasfasern, Basalt, aromatischem Polyamid und aromatischem Polyethylenterephthalat, bevorzugt bestehend aus Aramid.

6. Hybridkord nach einem oder mehreren der vorangehenden Ansprüche, **dadurch gekennzeichnet, dass** das niedermodulige Garn aus einem Polyamid (PA) oder einem Polyester besteht.

7. Hybridkord nach einem oder mehreren der vorangehenden Ansprüche, **dadurch gekennzeichnet, dass** der Twist-Faktor α der Endverdrehung 150 bis 250, bevorzugt 190 bis 210, beträgt.

8. Hybridkord nach einem oder mehreren der vorangehenden Ansprüche, **dadurch gekennzeichnet, dass** das hochmodulige Garn ein Aramidgarn der Feinheit 3360 dtex ist.

9. Festigkeitsträgerlage für elastomere Erzeugnisse, insbesondere für Fahrzeugluftreifen, aufweisend zumindest einen Hybridkord gemäß einem oder mehreren der vorangehenden Ansprüche.

10. Verfahren zur Herstellung eines Hybridkordes gemäß einem oder mehreren der Ansprüche 1 bis 8, **dadurch gekennzeichnet, dass** der hochmodulige Garn und der niedermodulige Garn mittels eines einstufigen Verfahrens miteinander verdreht werden.

## Claims

1. Hybrid cord for use as a reinforcing element in a reinforcing layer, in particular of a belt bandage, of a pneumatic vehicle tyre comprising at least one high-modulus yarn and one low-modulus yarn that are twisted together at the ends, the accumulated fineness of all of the high-modulus yarns being greater than 2500 dtex,
• the hybrid cord having with respect to the fineness of its yarn an asymmetric construction comprising precisely two yarns,
• the hybrid cord having just one high-modulus yarn and just one low-modulus yarn,
• the force that has to be respectively applied to a yarn for 1% elongation and for 2% elongation, normalized to the yarn fineness in tex and determined in accordance with ASTM D885, for a low-modulus yarn being less than 150 mN/tex for 1% elongation and less than 200 mN/tex for 2% elongation and for a high-modulus yarn being more than 300 mN/tex for 1% elongation and more than 500 mN/tex for 2% elongation,
**characterized in that**
• the high-modulus yarn has a fineness of greater than 2500 dtex and a highest value of 3360 dtex and
the fineness of the high-modulus yarn being greater than the fineness of the low-modulus yarn by at least a factor of 6, particularly preferably by a factor of 7.

2. Hybrid cord according to one of the preceding claims, **characterized in that** the low-modulus yarn has a fineness of at least 200 dtex, preferably of at least 350 dtex.

3. Hybrid cord according to one of the preceding claims, **characterized in that** the high-modulus yarn has a fineness of at least 3000 dtex, preferably of at least 3300 dtex, particularly preferably of 3360 dtex.

4. Hybrid cord according to one of the preceding claims, **characterized in that** the proportion of high-modulus yarn in the hybrid cord is 80 wt% (% by weight) to 90 wt%, preferably 82 wt% to 88 wt%.

5. Hybrid cord according to one or more of the preceding claims, **characterized in that** the high-modulus yarn consists of a material selected from the group consisting of carbon fibres, glass fibres, basalt, aromatic polyamide and aromatic polyethylene terephthalate, preferably consisting of aramid.

6. Hybrid cord according to one or more of the preceding claims, **characterized in that** the low-modulus yarn consists of a polyamide (PA) or a polyester.

7. Hybrid cord according to one or more of the preceding claims, **characterized in that** the twist factor α of the twisting at the ends is 150 to 250, preferably 190 to 210.

8. Hybrid cord according to one or more of the preceding claims, **characterized in that** the high-modulus yarn is an aramid yarn of the fineness 3360 dtex.

9. Reinforcing layer for elastomeric products, in particular for pneumatic vehicle tyres, having at least one hybrid cord according to one or more of the preceding claims.

10. Method for producing a hybrid cord according to one or more of Claims 1 to 8, **characterized in that** the high-modulus yarn and the low-modulus yarn are twisted together by means of a single-stage process.

## Revendications

1. Câble hybride destiné à être utilisé comme renfort dans une couche de renfort, en particulier un bandage de ceinture, d'un pneumatique de véhicule, ledit câble hybride comprenant au moins un fil à module élevé et un fil à module faible qui sont torsadés ensemble, la finesse cumulée de tous les fils à module élevés étant supérieure à 2500 dtex,
• le câble hybride ayant une construction asymétrique d'exactement deux fils en termes de finesse de fil,
• le câble hybride comportant exactement un fil à module élevé et exactement un fil à module faible,
• la force à appliquer sur un fil pour 1 % d'allongement et 2 % d'allongement, normalisée à la finesse du fil en tex et déterminée selon ASTM D885, étant, pour un fil à module faible, inférieure à 150 mN/tex pour 1 % d'allongement et inférieure à 200 mN/tex pour 2 % d'allongement et, pour un fil à module élevé, supérieure à 300 mN/tex pour 1 % d'allongement et supérieure à 500 mN/tex pour 2 % d'allongement,
**caractérisé en ce que**
• le fil à module élevé a une finesse de plus de 2500 dtex et une valeur maximale de 3360 dtex et la finesse du fil à module élevé est supérieure d'au moins un facteur 6, de manière particulièrement préférée d'un facteur 7, à la finesse du fil à module faible.

2. Câble hybride selon l'une des revendications précédentes, **caractérisé en ce que** le fil à module faible a une finesse d'au moins 200 dtex, de préférence d'au moins 350 dtex.

3. Câble hybride selon l'une des revendications précédentes, **caractérisé en ce que** le fil à module élevé a une finesse d'au moins 3000 dtex, de préférence d'au moins 3300 dtex, de manière particulièrement préférée de 3360 dtex.

4. Câble hybride selon l'une des revendications précédentes, **caractérisé en ce que** la proportion du fil à module élevé dans le câble hybride est de 80 % en poids à 90 % en poids, de préférence de 82 % en poids à 88 % en poids.

5. Câble hybride selon une ou plusieurs des revendications précédentes, **caractérisé en ce que** le fil à module élevé est en un matériau qui est choisi dans le groupe comprenant les fibres de carbone, les fibres de verre, le basalte, le polyamide aromatique et le polyéthylène téréphtalate aromatique, de préférence l'aramide.

6. Câble hybride selon une ou plusieurs des revendications précédentes, **caractérisé en ce que** le fil à module faible est en polyamide (PA) ou polyester.

7. Câble hybride selon une ou plusieurs des revendications précédentes, **caractérisé en ce que** le facteur de torsion α de la torsion finale est de 150 à 250, de préférence de 190 à 210.

8. Câble hybride selon une ou plusieurs des revendications précédentes, **caractérisé en ce que** le fil à module élevé est un fil d'aramide d'une finesse de 3360 dtex.

9. Couche de renfort pour produits élastomères, notamment pour pneumatiques de véhicules, comprenant au moins un câble hybride selon une ou plusieurs des revendications précédentes.

10. Procédé de fabrication d'un câble hybride selon une ou plusieurs des revendications 1 à 8, **caractérisé en ce que** le fil à module élevé et le fil à module faible sont torsadés ensemble au moyen d'un procédé en une étape.
